Europäisches Patentamt

European Patent Office

Office européen des brevets

(11) Publication number : **0 579 467 A1**

## (12) EUROPEAN PATENT APPLICATION

(21) Application number : **93305436.3**

(22) Date of filing : **12.07.93**

(51) Int. Cl.⁵ : **B65B 3/32**

(30) Priority : **13.07.92 JP 185180/92**

(43) Date of publication of application :
**19.01.94 Bulletin 94/03**

(84) Designated Contracting States :
**DE FR GB NL**

(71) Applicant : **SNOW BRAND MILK PRODUCTS & CO., LTD.**
**1-1, Naebo-cho 6-chome Higashi-ku**
**Sapporo-shi Hokkaido 065 (JP)**

(72) Inventor : **Shibauchi, Yoshito**
**No. 505, 13-5, Sayama-dai 1-chome**
**Sayama-shi, Saitama-ken (JP)**

(74) Representative : **Brunner, Michael John**
**GILL JENNINGS & EVERY Broadgate House 7**
**Eldon Street**
**London EC2M 7LH (GB)**

(54) Method and apparatus for filling a container with solid-liquid mixture.

(57)    The invention relates to a method of and an apparatus for dispensing solid-liquid mixture into a container (12) with a minimized variation of the number of solids in the mixture. The method includes steps of mixing solid with a first liquid having viscosity of at least 100 cp to form a solid-liquid base so that the solids are included about 30 to 70 wt% in the solid-liquid base and is uniformly distributed therein, measuring the solid-liquid base by a predetermined amount, measuring a second liquid to take out a predetermined amount, mixing the measured solid-liquid base with the measured second liquid to make a solid-liquid mixture with a predetermined number of the solids.
    Application : filling of yogurt containing chunks of fruit or vegetable therein into containers.

# FIG. I

In a food production, such as yogurt containing chunks of fruit and vegetable therein, first preparing solid-liquid base or preserves containing solids such as chunks of fruit or vegetable with a relatively high content rate, then mixing the solid-liquid base with fluid yogurt base, and then filling a container with the mixture. The invention relates to a method and an apparatus for filling the container with fluid food or solid-liquid mixture such as yogurt containing therein chunks or pulps of fruit or vegetable. More specifically, the invention relates to a method of measuring solid-liquid mixture or preserves containing solids and liquid such as yogurt and then filling the container with them. The invention further relates to an apparatus for mixing liquid such as yogurt with solid-liquid mixture or preserves containing a piece of relatively large fruit such as strawberries as well as relatively small solids such as small pieces of fruit and vegetable, chunks or pulps, and filling containers with them to produce final food products without substantial variation of solids in number as well as weight thereof among each of the final products.

BACKGROUND OF THE INVENTION

Many kinds of food products containing solids such as curries, stews and soups are now commercially available. Most of these food products are subject to retort treatment. That is, these food products are sterilized by heat after being introduced into containers and sealed up. Thus, since it is not necessary to keep them strictly in a sanitary condition during filling the container with food material, it is possible to manually fill the container with the material or to use a relatively simple filling machine with relatively less protection against microbial contamination.

On the other hand, food products such as yogurt and jelly are not subject to sterilization or heat treatment after being introduced into a container, so that it is required to strictly keep a sanitary condition during filling process. Conventionally, solid-liquid mixture containing relatively small solids at relatively low content rate is used for a pulp containing yogurt. In producing such a yogurt, liquid (yogurt) is mixed and stirred with solid-liquid base (base preserves) in a head tank, and then the mixture is measured by a predetermined amount and is introduced into a container. Alternatively, it has been known that the solid-liquid mixture is dousing into a pipe through which liquid yogurt is passing, and then mixed and stirred in a static mixer. The solid-liquid mixture is measured and introduced into a container after being fed to a head tank as well as the above mentioned method.

When the liquid (yogurt) is mixed with the solid-liquid base (pulp preserves) in a head tank, there generates a great variation of solids in number and/or weight for the container with which the solid-liquid mixture is filled, even if the solid-liquid mixture is completely mixed and stirred. The present inventor has newly found that the aforementioned variation of the solids has nothing to do with mixing and stirring, but inevitably occurs, even if they are completely mixed and stirred, depending on content rate of solids to the solid-liquid mixture. The variation is not a crucial for food product s containing a relatively great number of solids. However, the variation of the solids is a crucial issue for the packaged food products, each containing a small number of big solids.

The need for pulp preserves containing big fruit chunks as solids has been recently increased based on consumers' taste. As a result of the present inventor's research and experiment about the pulp preserves, the pulp preserves containing a relatively big piece of fruit and vegetable chunks or pulps in the range of 20 to 40 millimeters in size can be manufactured utilizing improved sterilizer system such as scraped heat exchanger or ohmic heating sterilizer system. As a result, food products containing relatively large chunks or pieces of fruits and vegetables are getting popular in food industry. Thus, the research for continuous sterilization technology is now prevalent in soups containing big chunks of solids. Consequently, techniques for filling the container with the solid-liquid mixture containing big chunks of fruit and vegetable, or pulps are now eagerly desired.

Generally, it is required to keep a filling system in a sanitary condition when food products such as yogurt and jelly containing solids are produced because the sterilization after filling a container with them will not be made. Accordingly, the filling system must satisfy the above requirement. For instance, food material must be fed through pipes to prevent foods from being exposed to the air, while many factors are controlled such as the size of solids, diameter of the pipes, viscosity of liquid, a difference in specific gravity between solid and liquid, and content rate of solids so as to prevent the solids from staying in the pipe. Such flow conditions in pipes are generally controlled by means of pumps and/or valves. However, solids containing flow has to be fed without any damage of solids, so that the pumps and/or valves have to be operated not to damage the solids. It is important not to damage the solids in particular in a filling valve which repeats on-off cycles frequently.

Keeping the solids or the fruit and vegetable chunks dispensed in the container at their original shape becomes remarkably difficult as the size of the chunk is increased. Because of this problem, the size of the solids introduced into the food product, such as pulp contained yogurt and the like has been up to now restricted to be less than 10 millimeters, for example, 6 millimeter or 9 millimeter cube chunk. The present invention can be applied to not only solids smaller than 10 millimeter but also those greater than 10 millimeter in size.

It is therefore an object of the invention to dispense pulps or solids ranged from about 10 to 40 millimeters into such as yogurt or jelly of a liquid state without any substantial variation of the solids in number and/or weight for each of the pulp contained yogurts as final products. It will be understood that distributing big chunks of fruit or vegetable uniformly to each of the final products, such as the fruit chunk contained yogurt, was conventionally quite difficult.

It is generally difficult to control the number of solids introduced into a container because the solid-liquid mixture is generally opaque and therefore it is difficult to count the number of solids flowing in the pipe of the filling system. Accordingly, in general, there is a substantial variation of the number of solids introduced into the respective containers of the final products. Such a variation is not a crucial problem for a product containing therein a great number of small solids. However, it is a big problem for a product containing therein a small number of big solids resulting in a difficulty in a quality control of the final products. This is one of reasons why big chunk containing products such as fruit chunk containing yogurts are not introduced in a market.

In a conventional filling system, solid-liquid mixture containing small solids at relatively low content rate is mixed and stirred with liquid such as yogurt base mixture, measured and then introduced into a container. In this system, solid content rate is decreased as a result of mixing solid-liquid mixture containing solids at relatively small content rate with other liquid. Thereafter, measurement and filling of the solids are carried out. Alternatively, the fruit or vegetable preserves are doused into a pipe of the system, through which yogurt base liquid is flowing, to form a mixture. Thereafter, the mixture is introduced in to a head tank where the mixture stirred in a static mixer and then is measured and dispensed into a container. After dousing, while the mixture is processed through the pip, the head tank, and the content rate of the solid to the liquid is lowered. It was conventionally believed that, in measuring and dispensing the solid-liquid mixture of the relatively low content rate of the solid to the liquid, the variation of the solids introduced into each of the containers is able to be eliminated as far as the solid-liquid mixture is completely stirred and mixed before the mixture is dispensed into the container.

The invention is based on the fact that the variation of solids introduced into the container is statistically generated.

It is an object of the present invention to provide a method of successively mixing a solid-liquid material with a liquid to form a uniform solid-liquid mixture and dispensing the solid-liquid mixture containing an approximately constant number and weight of solids of relatively large scale into a container in a manner that any substantial variation of the solids in number and/weight is not produced.

In particular, it is an object of the present invention to provide a method of successively mixing a fruit and vegetable preserves with liquid such as yogurt to form a fruit and vegetable chunk containing yogurt product (solid-liquid mixture) and successively dispensing the fruit and vegetable chunk containing product into a container without any substantial variation of the fruit and vegetable chunk in number and/or weight.

It is another object of the present invention to provide an apparatus comprising means for successively mixing a solid-liquid material with a liquid to form a uniform solid-liquid mixture and means for dispensing the solid-liquid mixture containing an approximately constant number and weight of solids of relatively large scale into a container in a manner that any substantial variation of the solids in number and/weight is not produced.

In particular, it is an object of the present invention to provide an apparatus comprising for successively mixing a fruit and vegetable preserves with liquid such as yogurt to form a fruit and vegetable chunk containing yogurt product (solid-liquid mixture) and means for successively dispensing the fruit and vegetable chunk containing product into a container without any substantial variation of the fruit and vegetable chunk in number and/or weight.

It is another object of the present invention to minimize the variation of solids or pulps dispensed in to the respective containers of the resulting solid-liquid products in number and/or weight.

It is still another object of the present invention to provide a closed system including tanks and pipes in which measuring, mixing, stirring and dispensing of yogurt and pulps, which are likely to be rotten by atmospheric air, are made under a condition which is kept off from atmospheric air.

The invention provides a method of dispensing solid-liquid mixture into a container including steps of mixing solids with a first liquid having viscosity of at least 100 cp to form a solid-liquid base so that the solids are included about 30 to 70 wt% in the solid-liquid base in which the solids are uniformly dispersed in the solid-liquid base, measuring the solid-liquid base to take out a predetermined amount thereof, measuring a second liquid to take out a predetermined amount thereof, mixing the measured solid-liquid base with the measured second liquid to produce a solid-liquid mixture containing a predetermined number and/or weight of the solids, and dispensing the solid-liquid mixture into the container.

In another aspect of the invention, a method of dispensing solid-liquid mixture into a container including

EP 0 579 467 A1

steps of mixing solids with a first liquid with viscosity of at least 100 cp to form a solid-liquid base so that a content rate of the solid is about 30 to 70 wt% of the solid-liquid base and is uniformly dispersed in the solid-liquid base, measuring the solid-liquid base to take out a predetermined amount thereof, adding a second liquid to the measured solid-liquid base to make a solid-liquid mixture containing a predetermined number and/or weight of the solid, and dispensing the solid-liquid mixture into a container to produce a dispensed product.

It has been believed that dispersion or variation of the number of solids in the final solid-liquid mixture product does not depend on the solid content rate in the solid-liquid mixture or preserves. However, the present inventor has found that a higher solid content rate can improve its uniformity concerning the distribution of solids to the final solid-liquid mixture product. As the solid content rate is increased, the uniformity of the distribution of the solids to the respective final products gets better. However, it should be noted that the maximum value of the solid content rate is about 60 wt% to about 70wt% under the actual condition, because spaces among solids are filled with the liquid. Where the solid content rate is decreased beyond 30wt% in weight, the variation of the solid in the mixture is remarkable. Solids are necessary to be uniformly mixed with viscous liquid phase material (first liquid) before being mixed with another liquid with a relatively low viscosity (second liquid). In this case, the viscosity of the first liquid is important. If the viscosity thereof is low, liquid is separated from solids so that only the liquid portion is moved. Accordingly the viscosity of the first liquid phase material is necessary to be at least about 100 cp, preferably in the range of 1,000 to 100,000 cp. It should be noted that material having the viscosity over 100,000 cp loses fluidity, so that it is difficult to treat the material as a fluid. The viscosity can be adjusted by varying kinds or amount of additive for stabilization or cooling the solid-liquid mixture.

The invention can be applied to solids such as pulps with size about 1 to 50 millimeters, preferably 10 to 40 millimeters.

According to the knowledge of the inventor, an expected value of the number of solids to be introduced into a container is designated by "Ave". The expected value of the number of solids to be introduced which is constant is designated by "Np". A standard deviation "Sig" of the number of solids to be introduced into a container can be expressed by the following equations;

$$Np = M_{LP} * pw / mp \quad (A)$$

$$Sig^2 = Np^2 * pw * (-mp + ma * pw + mp * pw)(r - 1)/(ml * pw - Np * r * (-mp + ma * pw - m_L * pw + mp * pw) \quad (B)$$

wherein;

"$M_{LP}$ denotes weight of solid-liquid mixture to be introduced into a container;

"r" denotes a ratio of fruit and vegetable preserves to solid-liquid mixture to be introduced into a container;

"mp" denotes weight of a piece of solid;

"ml" denotes weight of a separated hypothetical liquid particle which has the same volume as the solid;

"ma" denotes weight of liquid adhering to and moving with a piece of solid;

"pw" denotes solid content rate in solid-liquid mixture containing solids at high content rate;

"Np" denotes an expected value of a number of solids to be introduced into a container; and

"Sig" denotes the expected value of a standard deviation of a number of solids to be introduced into a container.

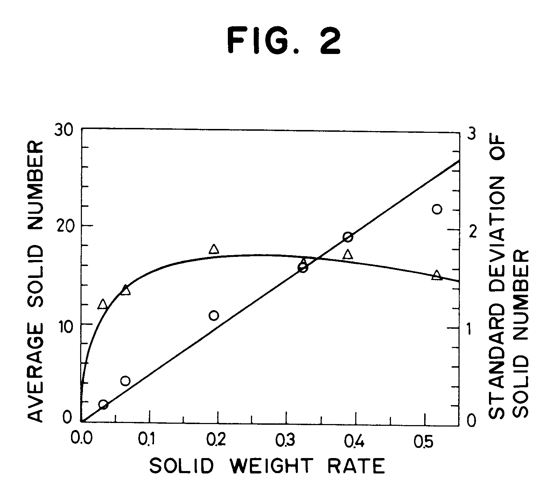

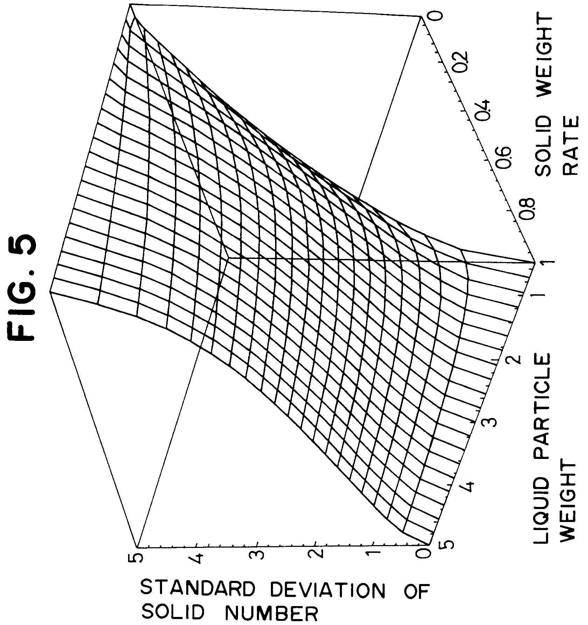

The equation (B) shows a relationship between solid content rate and variation in solids' number when solid-liquid mixture containing the constant number of solids is to be introduced. Fig. 5 shows a number of solids influenced by solid content rate and weight of hypothetical liquid particles, each of which is equivalent with a mean volume of the solids, supposed that the target weight of solids introduced into a container under the same condition as Fig. 2 is 13.75 grams. Fig. 5 shows that the greater the solid content rate is, the lower the standard deviation is, and that the standard deviation depend on "ml". The later explained embodiments 1 and 2 shows assumed variation generated in the equation (B).

Thus, the necessity of increasing solid content rate is theoretically confirmed for smaller variation in dispensing the solid-liquid mixture into a container. It is supposed that higher viscosity of liquid works to make variation of solids smaller, taking into consideration size of separated liquid particles, an amount of liquid adhering to solids and so on.

In one aspect of the invention, there is provided an apparatus for dispensing the solid-liquid mixture into a container including a first tank filled with a solid-liquid base in which solids is completely mixed with a first liquid. The solid-liquid base includes solids at high rate. The apparatus further includes a device for receiving the solid-liquid base from the first tank, measuring the base and discharging out the base, a second tank for containing therein a second liquid which is to be ultimately mixed with the solid-liquid base, a device for measuring the second liquid, a mixer for mixing the solid-liquid base with the second liquid to make a solid-liquid mixture, and a nozzle for receiving the solid-liquid mixture from the mixer and discharging the solid-liquid mix-

4

ture toward a container.

In another aspect of the invention, there is provided an apparatus for dispensing a solid-liquid mixture into a container including a first tank for containing therein a solid-liquid base in which solids are completely mixed with a first liquid, the solid-liquid base including solids at high rate, a second tank for containing therein a second liquid which is to be ultimately mixed with the solid-liquid base, a mixer for mixing the solid-liquid base with the second liquid to make a solid-liquid mixture, a device for measuring the solid-liquid mixture, and a nozzle for receiving the solid-liquid mixture from the measuring device and discharging the solid-liquid mixture toward a container.

In dispensing the solid-liquid mixture into a container, the measuring device of the solid-liquid base is operated in strict synchronism with the measuring device of the second liquid. The solid-liquid base is controlled to flow into the mixer in synchronism with the liquid flowing into the mixer with regard to start and end timings. In addition, the flow speed is maintained constant. Thus, a smaller variation of the solid content rate can be accomplished in the flow direction which could not be achieved by a mere mixing operation or conventional way.

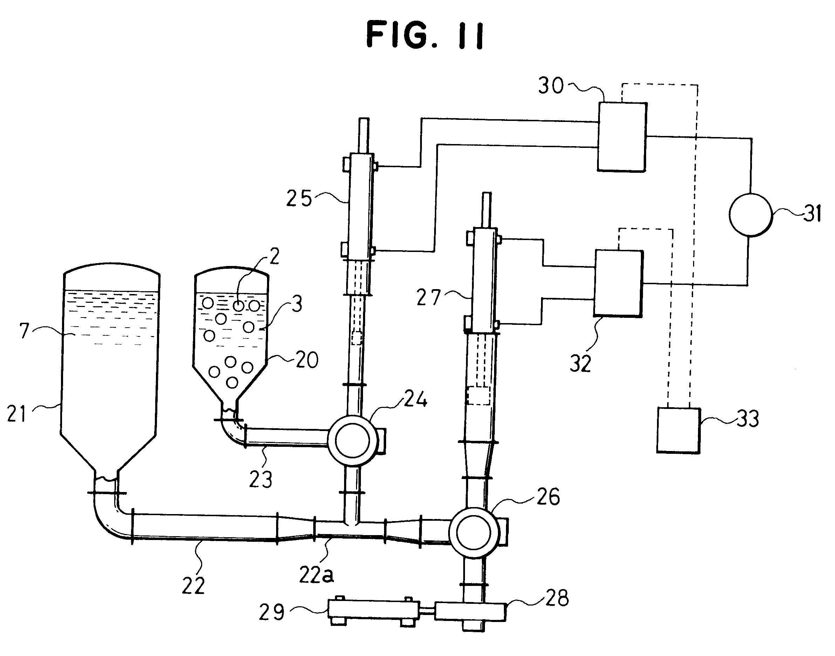

In an apparatus in accordance with the invention, as illustrated in Fig. 11, there is provided a mixing section in a passage through which liquid yogurt base (second liquid) passes, into which the solid-liquid base with a high content rate of solid is measured and supplied. A pump for filling a container with the mixture of liquid yogurt base and the solid-liquid mixture rate is controlled to operate in reverse synchronism with a pump for providing the solid-liquid mixture to a passage through which the liquid yogurt base passes.

More specifically, the apparatus for dispensing a solid-liquid mixture into a container in accordance with the invention including a first tank for containing therein a solid-liquid base or preserve in which solids is contained at high rate in a first liquid or fluidized material, a second tank for containing therein a second liquid, a mixer connected with the second tank, a first pump for producing a suction force and discharging the solid-liquid base, a second pump for producing a suction force and discharging a mixture of the solid-liquid base and the second liquid, a first switching valve for selectively connecting the first pump with either the first tank or the mixer, a second switching valve for selectively connecting the second pump with either the mixer or a filling section, and a controller for controlling the first and second pumps so that the second pump makes a discharge stroke when the first pump makes an intake stroke, while the second pump makes an intake stroke when the first pump makes a discharge stroke.

As used herein the term "solid-liquid base with a high content rate of solid" means liquid with relatively high viscosity including solids of relatively big size, such as fruit and vegetable chunks, pulps and the like, and herein-after is referred to as "preserves having high solid content rate" or merely "preserves".

As used herein "liquid material (first liquid)" has viscosity greater than 100 cp, preferably within the range of 1,000 to 100,000 cp.

As used herein the term "solid" means fruit and vegetable chunk, pulp, or a piece of fruit and vegetable itself, which is to be mixed with liquid material (first liquid) " to become the solid-liquid base.

As used herein the term "liquid (second liquid)" means fluid having high viscosity such as liquid yogurt or jelly, which is to be mixed with the solid-liquid base with a high content rate of solid to form a solid-liquid mixture to be introduced into a container to be a final product. In this specification, the "liquid (second liquid)" is referred to as yogurt base, merely yogurt or yogurt base mix.

The solid-liquid mixture is introduced into a container to form a final product which includes a solid-liquid base containing solids such as pulps at high rate and the second liquid such as yogurt or jelly.

In the present invention, solids such as pulp with a size in the range of 1 to 50 millimeters are mixed with first liquid having viscosity of at least 100 cp so that the solid content rate reaches about 30 to 70 wt% to form a solid-liquid base. Thus, the solid-liquid base with a high content rate of solid is made with the solids being uniformly distributed therein. Then, the solid-liquid base is measured to take out a predetermined amount and the measured amount of the solid-liquid base is separated. And then, it is mixed with separately measured second liquid such as yogurt base to produce a solid-liquid mixture with a predetermined number of the solids therein.

In another embodiment, the solid-liquid mixture with a high content rate of solid is measured to take out a predetermined amount and a second liquid is added thereto to thereby make a solid-liquid mixture with a substantially constant number of solids.

Thus the solid-liquid mixture is then introduced into a container of a predetermined volume.

Fig. 11 illustrates an apparatus in accordance with the invention. A first pump sucks preserves with high solid content rate from a first tank. At this stage, a second pump p is in a dispensing stroke for dispensing the solid-liquid mixture into a container. Then, first and second valves are switched to change the operation stroke of the first pump. The first pump discharges the preserves to a mixing section. At this stage, the second pump is in a suction stroke. The preserves discharged to the mixing section is mixed with a yogurt base in the mixing section, and the mixture is sucked by the second pump to be introduced thereto. In a next stroke, the first pump is switched to be in a suction stroke while the second pump is switched to be in a delivery stroke. Consequently, the solid-liquid material sucked by and staying in the second pump is fed to a dispensing section to be dispensed into a container. The preserves are successively supplied to yogurt base flowing at reduced diameter portion of the mixing section, so that the preserves are uniformly mixed with the yogurt base resulting in no substantial variation of solids such as pulp in the yogurt base among the respective containers.

The above and other objects and advantageous features of the present invention will be made apparent from the following description made with reference to the accompanying drawings.

In the accompanying drawings:-

Fig. 1 is a schematic view illustrating a filling apparatus in accordance with the invention.

Fig. 2 is a graph in which the axis of ordinates represents a standard deviation of a number of solids and an average number of solids and the axis of abscissas represents solid content rate.

Fig. 3 is a graph showing a relationship between solid content rate and a standard deviation of a number of solids on the condition that a target number of solids to be introduced into a container is determined.

Fig. 4 is a graph showing a relationship among solid content rate, a weight of separated hypothetical liquid particle with the same volume of the solid and variation in the number of solids.

Fig. 5 is a graph showing variation in a number of solids on the condition that a target number of solids to be introduced is determined.

Fig. 6 is a graph similar to Fig. 2, but for another embodiment.

Fig. 7 is a graph similar to Fig. 3, but for another embodiment.

Fig. 8 is a schematic view similar to Fig. 1, but of another embodiment.

Fig. 9 is a bar graph showing weight distribution of solids in preserves having high solid content rate.

Fig. 10 is a graph similar to Figs. 3 and 7, but for another embodiment.

Fig. 11 is a schematic view illustrating a filling apparatus in accordance with another embodiment.

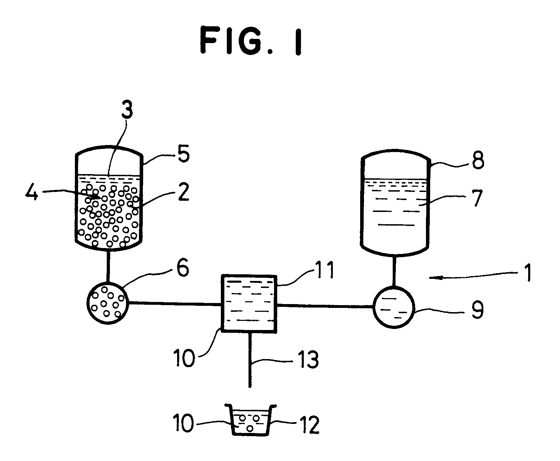

A preferred embodiment in accordance with the invention will be explained hereinbelow with reference to drawings. As illustrated in Fig. 1, an apparatus 1 in accordance with the invention dispenses a predetermined amount of solid-liquid mixture into a container, and includes a preserves holding tank 5 in which solid-liquid base 4 with a high content rate of solid or preserves 4 with a high solid content rate is contained. The preserves 4 including solids 2 at high content rate is completely mixed with a first liquid 3. The apparatus 1 also includes a measuring device 6 for receiving the preserves 4 from the tank 5, measuring the preserves 4 and feeding out, a liquid tank 8 for containing therein a second liquid 7 such as yogurt base to be mixed with the preserves 4, a liquid measuring device 9 for measuring the second liquid 7, a mixer 11 for mixing the preserves 4 with the second liquid 7 to manufacture solid-liquid mixture 10, and a filling nozzle 13 for receiving the solid-liquid mixture 10 from the mixer 11 and dispensing to a container 12.

Any measuring devices can be used such as a piston & cylinder type device, a fixed displacement pump, a combination of a flow meter and a valve, or a combination thereof for both solid and liquid. The piston & cylinder type device has various deficiencies; a limitation in suction force, difficulty in discharging air if air enters a cylinder, and deterioration in accuracy of measuring. However, the device has advantages; low cost due to simple structure and easiness in handling. It is beneficial to pressurize a tank containing solids or liquid in order to strengthen a suction force.

When a fixed displacement pump is used for feeding solid-liquid mixture, the pump should not damage solids therein. The pump includes a monopump, a one-flute pump, and sinepump, which are all commercially available. Using these pumps makes successive dispensing quite easy, but it is necessary to provide a control system to operate a pump intermittently when an intermittent dispensing operation of the material into a container is to be performed. The control system increases accuracy in dispensing and also prevents air from entering a cylinder. However, such a pump is generally expensive, so that an arrangement in which a plurality of a filling section are disposed in series generates a cost problem. In a combination of a flow meter and a valve, solids or liquid are fed by non-fixed delivery pump outside of the filling section, measured by a flow meter and a flow of which is interrupted by a valve when a predetermined amount of solids or liquid is measured. The flow meter includes a volumetric flow meter, ultrasonic flow meter, vortex flow meter, electromagnetic flow meter and mass flow meter. The combination of a flow meter and a valve needs a sophisticated control system to operate the valve for measuring, however, can change its displacement easily and fill the container with a material accurately. A timer may be used to open and close a valve.

The mixer includes in-line type static mixer, an orifice, contracted vein, a nozzle producing jet effect, an obstacle disposed in a flow for disturbing the flow, and disturbance blade driven by outside power to rotate or oscillate.

Thus, the invention is carried out in a closed system kept from the outside, so that a resultant product is not contaminated.

EP 0 579 467 A1

Embodiment 1

The solid-liquid mixture is dispensed into a container under following conditions. Green peas are used as solids. With a filling amount of the solid-liquid mixture being kept constant, solid content rate by weight in the preserves was varied within 10 to 60 wt%. A test was repeated ten times for each solid content rate.

| Conditions | |
|---|---|
| Average diameter of solids (green peas) | 9.8 millimeters |
| Average weight of solids | 0.5087 grams |
| Average volume of solids | 0.4934 cubic centimeter |
| Specific gravity of solids | 1.0309 |
| Solid content rate by volume when most densely introduced | 0.6376 |
| Total weight of preserves | 200 grams |
| Diameter of the suction section of a cylinder for dispensing | 20 millimeters |
| Viscosity of the first liquid (aqueous solution of carboxylmethylcellulose) | 25,000 cp |
| Specific gravity of the first liquid | 0.9984 |
| Temperature | 15 degrees centigrade |
| Weight of a resultant solid-liquid mixture | 25 grams |

The result of the test is shown in Fig. 2.

An average number of solids which are introduced solid-liquid mixture is increased in proportion to the solid content rate in the preserves. The standard deviation is generally constant and has little variation in the range of 15 to 20 wt% of the solid content rate. In Fig. 2, since a filling amount is kept constant, an average number of solids increases as solid content rate increases. However, in actual dispensing, it is necessary to determine a target number of solids before dispensing.

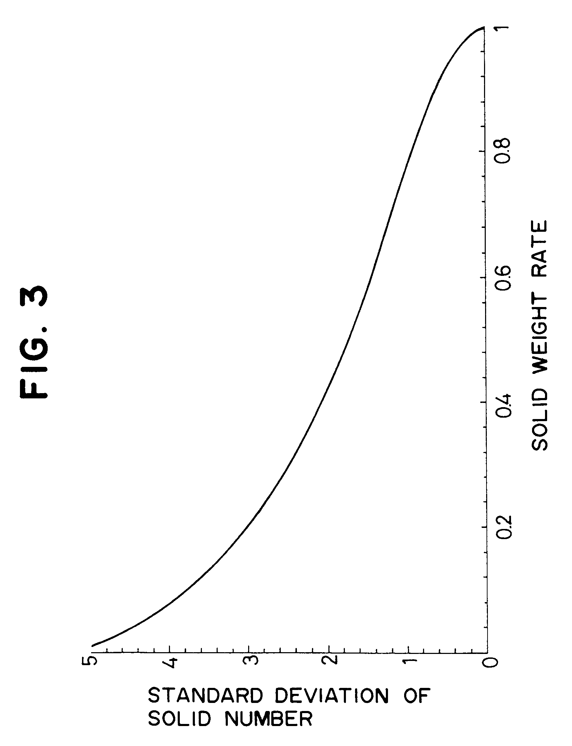

Fig. 3 shows, based on Fig. 2, a relationship between solid content rate in preserves which is presumed using the aforementioned equation (B) with an average number of the solids in the solid-liquid mixture being kept constant, and a standard deviation of solids in the introduced solid-liquid mixture. An average number of the solids in the solid-liquid mixture is 27.026. The variation decreases as the solid content rate increases, and reduces by half at about 30 wt% of the solid content rate. Thus, it can be understood that the variation can be reduced by increasing the solid content rate on the condition that the number of the solids to be introduced is kept constant.

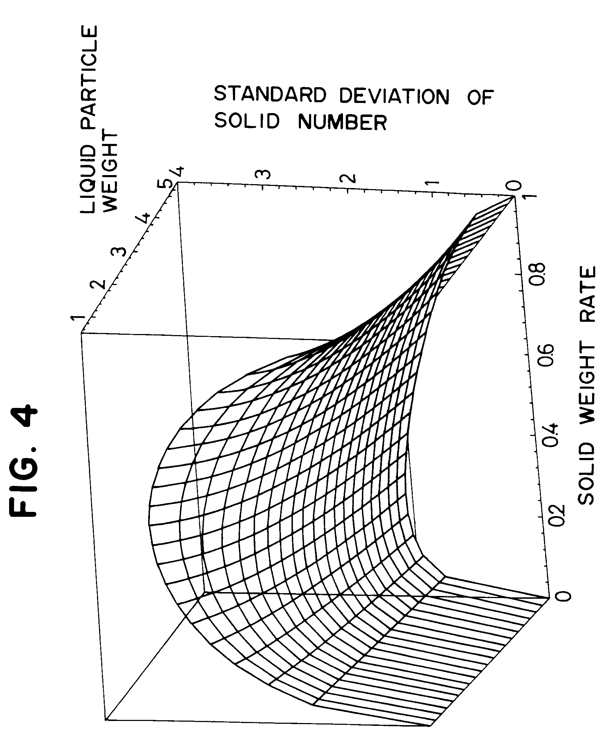

In this example, "ml" is 4 grams and "ma" is 0 gram. Figs. 4 and 5 show a relationship among a solid content rate, weight of a separated hypothetical liquid particle with the same volume of the solid and a standard deviation of a number of solids. Fig. 4 shows the relationship when the solid content rate and the weight of the hypothetical liquid particle "ml" are varied with a filling amount being kept constant, while Fig. 5 shows the relationship when the solid content rate and "ml" are varied with an average number of solids to be introduced being kept constant.

Embodiment 2

A test was carried out under following conditions. Cubically cut carrots are used as solids.

| Conditions | |
|---|---|
| Average size ( a side length) of solids (cubic carrots) | 8.47 millimeters |
| Average weight of the solids | 0.6023 grams |
| Average volume of the solids | 0.6071 cubic centimeter |
| Specific gravity of the solids | 0.9921 |
| Solids content rate by volume when most densely introduced | 0.6727 |
| Total weight of the preserves | 200 grams |
| Diameter of the suction section of a cylinder for dispensing | 20 millimeters |
| Viscosity of a first (aqueous solution of carboxylmethylcellulose | 25,000 cp |
| Specific gravity of the first liquid | 0.9984 |
| Temperature | 25 degrees centigrade |
| Weight of a resultant solid-liquid mixture | 15 grams |

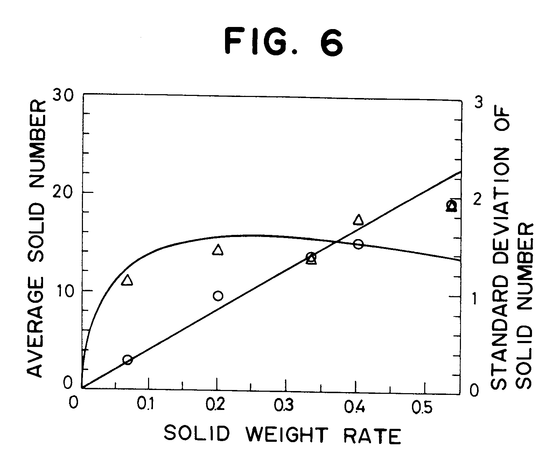

The result of the test is shown in Fig. 6. An average number of the solids in the introduced liquid mixture is increased in proportion to the solid content rate in the preserves. The standard deviation is generally constant and has little variation in the range of 15 to 20 wt% of the solid content rate.

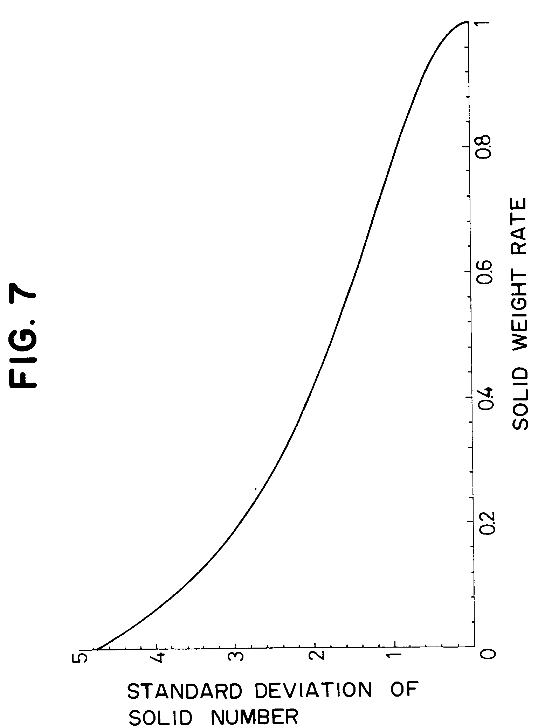

Fig. 7 shows, based on Fig. 6, a relationship between the solid content rate in preserves which is presumed using the aforementioned equation (B) with an average number of the solids in the solid-liquid mixture being kept constant, and a standard deviation of solids in final solid-liquid mixture. An average number of the solids in the solid-liquid mixture is 22.829. Similarly to the embodiment 1, the variation decreases as the solid content rate increases. The comparison of the embodiments 1 and 2 shows that the shape of solids, for instance, whether the solids are circular or rectangular, does not influence the variation.

Embodiment 3

A test was carried out under following conditions. Plural pieces of strawberries were used as a solid.

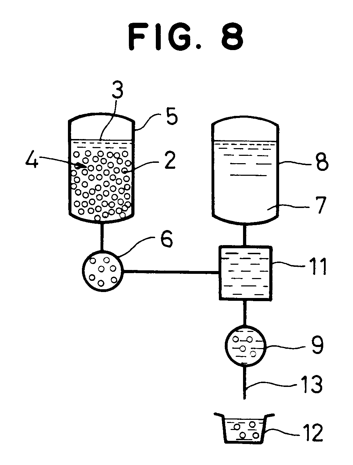

The apparatus shown in Fig. 8 was used. The measuring device 9 is disposed downstream of the mixer 11 for measuring a final solid-liquid mixture.

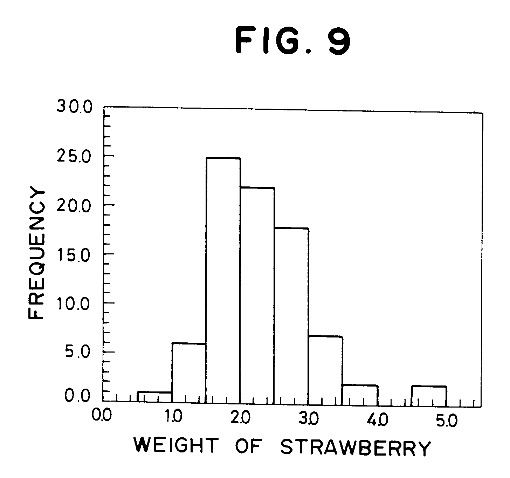

Fig. 9 shows a distribution of the weight of strawberries used in the test.

| Conditions | |
|---|---|
| Size of the solids (strawberries) | 12 to 30 millimeters |
| Viscosity of the second liquid | 3,760 cp |
| Solids content rate | 40 wt% |
| Viscosity of yogurt base | 2,000 cp |

In this test, the preserves was sampled by a predetermined amount using various techniques as follows to measure a number of the solids contained in the preserves.

(A) The completely mixed preserves was sampled manually using a spoon.
(B) The completely mixed preserves was measured and sampled using the apparatus illustrated in Fig. 8.
(C) The mixture of the preserves and the liquid yogurt (second liquid) was sampled using the apparatus illustrated in Fig. 8.

The result of the test is as follows.

| No. of the test | 1 | 2 | 3 |
|---|---|---|---|
| Number of sampling | 20 | 5.93 | 30 |
| Average number of the solids | 5.35 | 5.93 | 5.16 |
| Standard deviation of a number of solids | 1.599 | 1.462 | 1.577 |

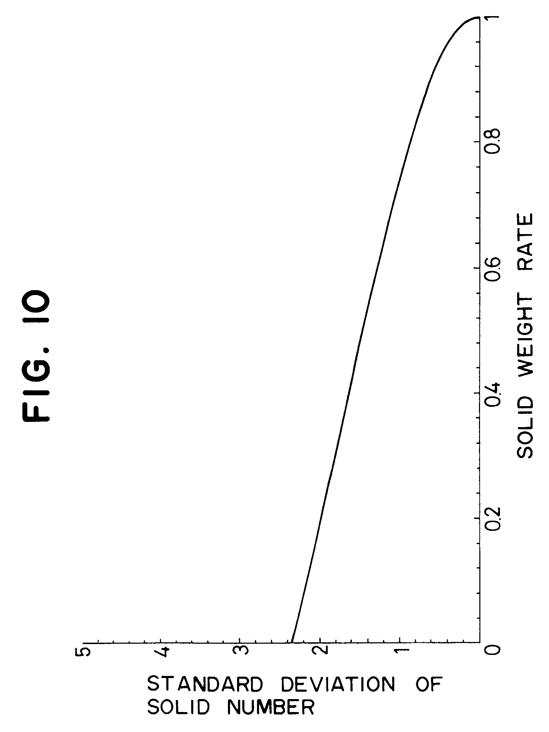

There can scarcely be seen the variation in each test. That is, the variation resulted by the filling apparatus is almost similar to that of the case No. 1 wherein complete mixture is introduced into a container under ideal conditions. The variation inherent to a filling process could not be seen. Fig. 10 shows a relationship between the solid content rate and the variation, which is presumed using the equation (B) on the basis of the result of the test. In this case, "ml" is 4 grams and "ma" is 0 gram. The expected value by weight for solids is 13.75 grams. As illustrated in Fig. 10, the standard deviation of a number of solids at 40 wt% of the solid content rate is approximately 1.6, which is consistent with the value obtained by an experiment.

It can be understood from the result that a desired variation in a number of solids can be obtained if the solid content rate exceeds about 40 wt%.

Fig. 11 illustrates a preferred filling apparatus for reducing the invention to practice.

The apparatus includes a preserves tank 20 for containing therein preserves 3 containing chunks 2 at high content rate and a yogurt base tank 21 for containing therein a yogurt base mixture 7. A mixing pipe 22 is connected at its one end to the tank 21 at a bottom thereof. The mixing pipe 22 is formed with a reduced diameter portion 22a. A preserves delivery pipe 23 is connected to the tank 20 at a bottom thereof and also connected to a first pump or a first cylinder 25 through a cross valve 24. The cross valve 24 alternately switches the connection of the first cylinder 25 to the preserves delivery pipe 23 or the reduced diameter portion 22a of the mixing pipe 23. The mixing pipe 22 is connected at other end to a second pump or a second cylinder 27 through a second cross valve 26. The second cross valve 26 is connected to a shutter 28 working as a filling section. The second cross valve 26 alternately switches the connection of the second cylinder 27 to the mixing pipe 22 or the shutter 28. The shutter 28 is provided with an actuator 29 for opening and closing the shutter 28.

The first cylinder 25 is connected to an air compressor 31 through a control valve 30, while the second cylinder 27 is connected to the air compressor 31 through a control valve 32. A control circuit 33 controls the control valves 30 and 21 to work. The control circuit 33 controls the valves 30 and 32 so that the second cylinder 27 is in a delivery stroke when the first cylinder 25 is in an intake stroke, while the second cylinder 27 is in an intake stroke when the first cylinder 25 is in a delivery stroke. The control circuit 33 also controls the cross valves 24 and 26. The control circuit 33 controls the cross valve 24 so that the first cylinder 25 is connected to the preserves delivery pipe 23 during the intake stroke of the first cylinder 25, while the first cylinder 25 is connected to the reduced diameter portion 22a of the mixing pipe 22 during the discharge stroke of the first cylinder 25. Similarly, the control circuit 33 controls the cross valve 26 so that the second cylinder 27 is connected to the mixing pipe 22 during the intake stroke of the second cylinder 27, while the second cylinder 27 is connected to the shutter or the filling section 28 during the discharge stroke of the second cylinder 27.

In operation, the cross valve 24 connects the pipe 23 to the first cylinder 25 and the cross valve 26 connects the second cylinder 27 to the shutter 28. Under this situation, the first cylinder 25 starts the intake stroke, and the second cylinder 27 starts the delivery stroke. The yogurt base in the mixing pipe 22 stays static. The preserves 3 containing solids 2 is sucked from the tank 20 to the first cylinder 25 through the pipe 23 by an amount determined by a stroke of the first cylinder 25. At this stage, the second cylinder 27 is in its delivery stroke, so that the mixture in the second cylinder 27 is introduced into a container (not shown) from the shutter 28.

Then, the cross valves 24 and 26 are simultaneously switched to connect the first cylinder 25 to the reduced diameter portion 22a of the pipe 22 and the second cylinder 27 to the mixing pipe 22. At this stage, the first cylinder 25 turns to be in a delivery stroke, and the second cylinder 27 turns to be in an intake stroke. The yogurt base 7 in the tank 21 is sucked to the second cylinder 27 through the mixing pipe 22. During this process, the preserves containing solids at high content rate in the first cylinder 25 is discharged to the reduced diameter portion 22a of the pipe 22 to be mixed with the yogurt base 7 passing through the mixing pipe 22. Since the preserves is discharged to the reduced diameter portion 22a of the pipe 22, it can be uniformly mixed with the yogurt base. The mixture sucked into the second cylinder 27 is introduced in a next step into a container (not shown) from the shutter 28.

As aforementioned, the present invention can minimize a variation in a number of solids distributed in the solid-liquid mixture. In addition, the reduction of the variation of the number of the solids in the final product can be predicted.

While the present invention has been described in connection with certain preferred embodiments, it is to be understood that the subject matter encompassed by way of the present invention is not to be limited to those specific embodiments. On the contrary, it is intended for the subject matter of the invention to include all alternatives, modifications and equivalents as can be included within the spirit and scope of the following claims.

## Claims

1. A method of dispensing a solid-liquid mixture into a container wherein the solid-liquid mixture is measured and mixed in a system isolated from an outside atmosphere comprising steps of;

   mixing solids with a first liquid having viscosity of at least 100 cp so that the solid occupies about 30 to 70 wt% of the solid-liquid base in which the solids are uniformly dispersed and the high content rate of the solids to the solid-liquid base is established;

   measuring the solid-liquid base to take out a predetermined amount thereof;

   measuring a second liquid to take out a predetermined amount thereof;

   mixing the measured solid-liquid base with the measured second liquid to produce a solid-liquid mixture containing a predetermined number and/or weight of the solids; and

   dispensing the solid-liquid mixture into the container.

2. A method of dispensing solid-liquid mixture into a container wherein the solid-liquid mixture is measured and mixed in a system isolated from an outside atomosphere comprising steps of;

   mixing solids with a first liquid with viscosity of at least 100 cp to form a solid-liquid base so that a content rate of the solid is about 30 to 70 wt% of the solid-liquid base and is uniformly dispersed and the high content rate of the solids to the solid-liquid base is established;

   measuring the solid-liquid base to take out a predetermined amount thereof;

   adding a second liquid to the measured solid-liquid base to make a solid-liquid mixture containing a predetermined number and/or weight of the solid, and;

   dispensing the solid-liquid mixture into a container to produce a dispensed product.

3. A method as recited in claim 1 or 2 wherein the solid is about 1 to 50 millimeters in diameter.

4. A method as recited in claim 1 or 2 wherein the solid-liquid base is about 1,000 cp to 100,000 cp in viscosity.

5. A method as recited in claim 1 or 2 wherein the solid-liquid base is preserves.

6. A method as recited in claim 1 or 2 wherein the second liquid is yogurt with about 2000 cp in viscosity.

7. An apparatus for dispensing solid-liquid mixture into a container comprising:

   a first tank for containing therein solid-liquid base in which solids are completely mixed with a first liquid, said solid-liquid base with a high content rate of the solids;

   means for receiving said solid-liquid base from said first tank, measuring the base and discharging out the base;

   a second tank for containing therein a second liquid which is to be ultimately mixed with the solid-liquid base;

   means for measuring said second liquid;

   means for mixing said solid-liquid mixture with said liquid to make a solid-liquid mixture; and

   a nozzle for receiving said solid-liquid mixture from said mixing means and discharging said solid-liquid mixture toward a container.

8. An apparatus for dispensing solid-liquid mixture into a container comprising:

   a first tank for containing therein a solid-liquid base in which solids are completely mixed with a first liquid, said solid-liquid base with a high content rate of solids;

   a second tank for containing therein a second liquid which is to be ultimately mixed with the solid-liquid base;

   means for mixing said solid-liquid mixture with said liquid to make a solid-liquid mixture;

   means for measuring said solid-liquid mixture; and

   a nozzle for receiving said solid-liquid mixture from said measuring means and discharging said solid-liquid mixture toward a container.

9. An apparatus for dispensing solid-liquid mixture into a container comprising:

a first tank for containing therein solid-liquid base in which solids are contained with high content rate in a first liquid;

a second tank for containing therein a second liquid;

a mixer connected with said second tank;

first pump means for producing a suction force and discharging said solid-liquid base;

second pump means for producing a suction force and discharging a mixture of said solid-liquid base and said second liquid;

a first switching valve for selectively connecting said first pump means with either said first tank or said mixer;

a second switching valve for selectively connecting said second pump means with either said mixer or a filling section; and

means for controlling said first and second pump means so that said second pump means makes a discharge stroke when said first pump means makes an intake stroke, while said second pump means makes an intake stroke when said first pump means makes a discharge stroke.

10. A method as recited in either one of claim 7, 8 or 9 wherein the solid is about 1 to 50 millimeters in diameter.

11. A method as recited in either one of claim 7, 8 or 9 wherein the solid-liquid base is about 1,000 cp to 100,000 cp in viscosity.

12. A method as recited in either one of claim 7, 8 or 9 wherein the solid-liquid base is preserves.

13. A method as recited in either one of claim 7, 8 or 9 wherein the second liquid is yogurt with about 2000 cp in viscosity.

# FIG. I

# FIG. 2

# FIG. 3

FIG. 4

# FIG. 5

EP 0 579 467 A1

# FIG. 6

# FIG. 7

# FIG. 8

# FIG. 9

# FIG. 10

EP 0 579 467 A1

21

# FIG. 11

EP 0 579 467 A1

| | European Patent Office | EUROPEAN SEARCH REPORT | Application Number |
|---|---|---|---|
| | | | EP 93 30 5436 |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | WO-A-8 806 552 (ODIN DEVELOPMENTS)<br><br>* page 4, line 22 - page 7, line 25; figures * | 1,2,7,8,9 | B65B3/32 |
| Y | | 5 | |
| Y | EP-A-0 265 128 (METAL BOX)<br>* column 3, line 29 - column 6, line 41; figures * | 5 | |
| A | | 1,2,7,8 | |
| A | EP-A-0 269 507 (ERCA HOLDING)<br><br>* column 9, line 1 - column 10, line 50; figures * | 1,2,6,7,8 | |
| | | | TECHNICAL FIELDS SEARCHED (Int. Cl.5) |
| | | | B65B |

The present search report has been drawn up for all claims

| Place of search | Date of completion of the search | Examiner |
|---|---|---|
| THE HAGUE | 02 NOVEMBER 1993 | JAGUSIAK A.H.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)